# EUROPEAN PATENT SPECIFICATION

(11) **EP 1 839 619 B1**
(45) Date of publication and mention of the grant of the patent: **19.05.2010**
(21) Application number: 07104964.7
(22) Date of filing: 27.03.2007
(51) Int. Cl.: A61C 19/04

(54) **Dental unit**
Dentaleinheit
Unité dentaire

(30) Priority: 31.03.2006 IT BO20060232
(43) Date of publication of application: 03.10.2007
(73) Proprietor: CASTELLINI S.p.A., 40013 Castel Maggiore (Bologna) (IT)
(72) Inventor: Castellini, Franco, 40124, BOLOGNA (IT)
(74) Representative: Lanzoni, Luciano

(56) References cited:
- WO-A-2005/077298
- WO-A-2005/115271
- FR-A- 2 741 524
- JP-A- 5 064 643
- US-A- 5 049 069
- US-A- 5 295 833

## Description

This invention relates to a dental unit.

At present, a dental unit in its most basic form typically consists of a chair, a column-like base which mounts the main and auxiliary items of dental equipment, a tray for a main set of handpieces and, if necessary, another tray for an accessory set of handpieces.

The dental unit is normally equipped with a plurality of dental handpieces, divided substantially into instruments used for tooth treatment and removal of material (such as, for example, the turbine, the micromotor and the scaler) and instruments, for example, the syringe and the polymerising lamp, used for complementary stages of dental treatment.

These handpieces may be located, depending on function, either on the main tray or on the accessory tray.

Over time, this basic structure has been constantly improved in both the internal and external features of the dental unit. Thus, the latest dental units include increasingly complex water and compressed air systems, one or more microprocessor units designed to control the functions of the dental unit, and other technological developments.

These continual improvements, combined with the possibility of using microprocessors, have made it possible to improve the handpieces and other working parts of the dental unit in order to optimise the unit, making it as complete and versatile as possible, and thereby avoiding the need to provide separate handpieces or apparatus for special operations on patients.

One of these special operations involves the preparation of root canals of teeth to be devitalized or of treated root canals to be subjected to restorative treatment, and requires the use of a cleaning handpiece which is normally equipped with a sonic or ultrasonic vibrating tip for well-known tooth surface cleaning operations.

In short, the scaler handpiece may be fitted with a customary tip known as a "file" (usually made of nickel-titanium and having a mainly conical shape and a rough surface used for removing material) coupled to the handpiece using appropriate clamp-like fittings on the handpiece and on the file.

The file, which may have various geometric size and taper configurations according to the type of root canal, uses the vibrations generated by the handpiece and the cavitation of the fluid either flowing through the handpiece itself or injected by the dental surgeon using a syringe to clean and remove material from the canal.

The prior art described above is certainly effective but puts the dental surgeons who use it in a critical working situation since scalers do not at present have any form of apical detection system, that is to say, no way of detecting the position of the file tip relative to the apical portion at the bottom end of the root canal to be treated and that means the only way of checking that the canal has been completely and correctly cleaned out is by an X-ray examination.

An example of dental unit can be seen in document WO 2005/115271.

Moreover, an example of an auxiliary apparatus for special operations on patients can be seen in document FR 2 741 524, upon which prior art the two-part form of claim 1 is based.

The Applicant, ever aware of the technical and practical requirements of dental surgeries, has designed and made a dental unit featuring a system for detecting the position, relative to the apex, of the scaler handpiece tip inside the root canal being treated, thus making the dentist's task easier in this particular situation.

According to the invention, this aim is achieved by a dental unit, in particular a dental featuring a system for detecting the position of the scaler handpiece tip relative to the apex and having the technical characteristics described in one or more of the appended claims.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a schematic side view of a dental unit according to this invention;
- Figure 2 is a diagram illustrating some of the parts of the dental unit of Figure 1;
- Figure 3 is a side view illustrating a part of a vibratory handpiece to which a filing tool is applied.

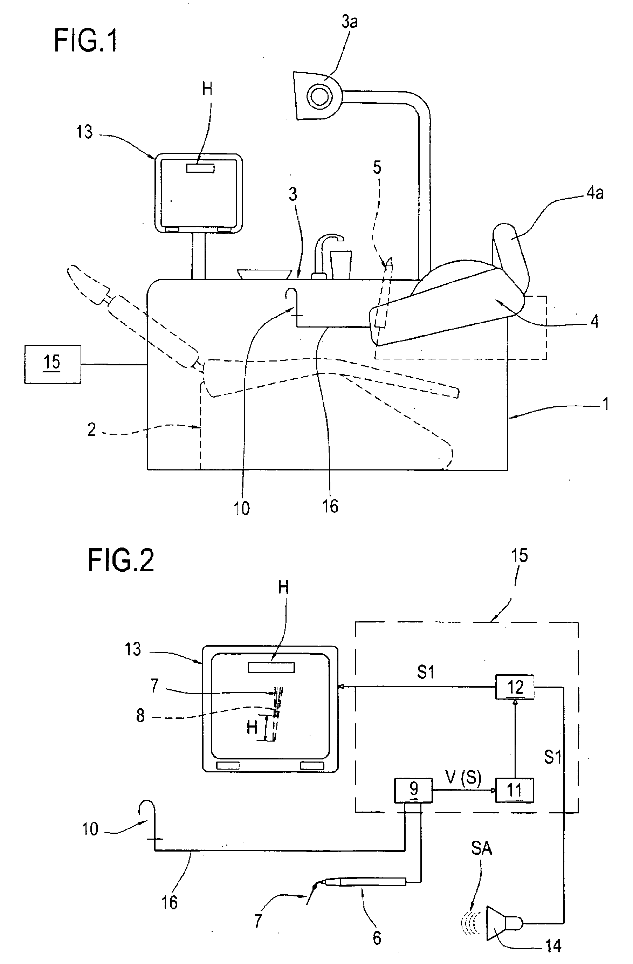

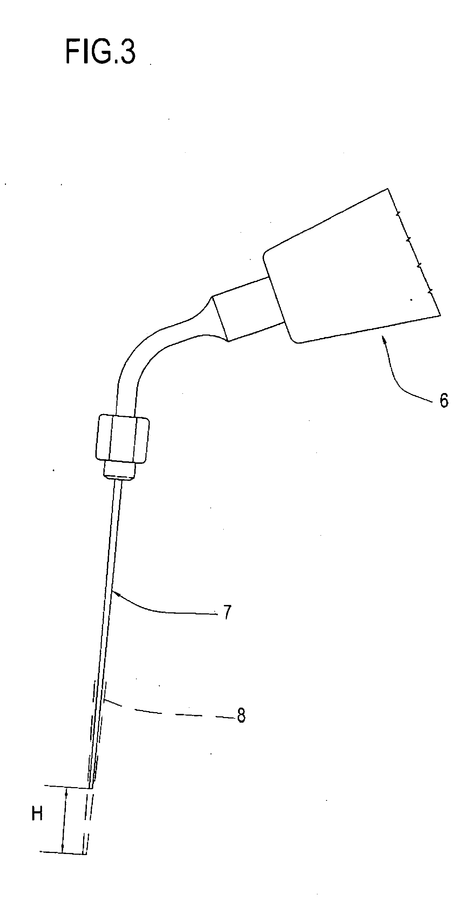

With reference to the accompanying drawings, in particular Figure 1, the dental unit according to the invention, labelled 1 in its entirety, essentially comprises, insofar as is relevant to the present invention:
- a chair 2;
- a base 3 positioned next to the chair 2 and mounting main or auxiliary equipment (some of which will not be described here since they are of well-known type and do not strictly form part of the invention);
- at least one handpiece tray 4 (either independent or supported by the base 3 through a column 4a) holding a plurality of operating or auxiliary handpieces 5 for dental operations of traditional conservative type, for implants and/or for endodontic surgery (for example, a turbo-drill, a syringe, a handpiece with a brushless micromotor, a micromotor with brushes, etc.); the handpieces 5 include a handpiece 6 adapted to impart sonic or ultrasonic vibrations to a file tip 7 applicable to the handpiece 6 and used for treating root canals 8 (see Figures 2 and 3).

The handpiece 6 is usually used with another tip for cleaning tooth surfaces but, in this specific case, is fitted with the tip 7 for the odontological treatment of the root canals 8.

Obviously, the dental unit may include other components to complete its structure, such as an assistant's tray for holding additional handpieces, a light 3a, etc.

The dental unit 1 further comprises:
- a unit 9 for measuring a given value V of an electrical quantity generated, in combination, by a first pole (in this case, purely by way of example, the negative pole) defined by the file tip 7 applied to the vibratory handpiece 6 and positioned in the root canal 8, and a second pole (the positive pole) defined by a reference element 10 positioned in the oral cavity (usually connected to the patient's lip) and connected at the other end to the dental unit 1;
- a unit 11 for processing a respective signal S sent by the measuring unit 9 as a function of the value V of the electrical quantity in such a way as to transduce the signal S into a value H corresponding to the distance between the tip 7 and the apex of the root canal 8;
- means 12 for detecting the distance value H, connected to the processing unit 11 and designed to at least issue a proportional audio/video reference signal S1 as a function of the distance H between the tip 7 and the apex of the root canal 8.

As shown in Figures 1 and 2, the dental unit 1 according to the invention may be provided with a data display screen 13 associated with the dental unit 1.

In this case, the screen 13 may be connected to the means 12 for detecting the distance value H so as to display the value H in alphanumeric form. Preferably, but without limiting the scope of the invention, the distance value H can be displayed as a number expressed in millimetres.

Similarly, the dental unit 1 may also comprise a sound emitting unit 14 connected to the detecting means 12 so as to emit an audible signal SA proportional to the distance value H reached by the tip 7.

To coordinate the multiplicity of main and accessory operating components, there is usually on the dental unit 1 a primary microprocessor unit 15 for controlling the main and auxiliary functions.

When a microprocessor unit 15 is present, the unit 9 for measuring the value V of the electrical quantity and the processing unit 11 may be connected directly to the microprocessor unit 15 and said unit 15 can directly control the detecting means 12 and coordinate the transmission of the signals S1 to the screen 13 and/or to the sound emitting unit 14.

By way of example, without limiting the scope of the invention, the measuring unit 9 may measure an electrical impedance.

As shown in Figures 1 and 2, the above mentioned reference element may be composed of a metal hook 10 fitted with a connecting cable 16 applicable to the dental unit 1 (preferably but not necessarily to the handpiece tray 4) and connected electrically to the above mentioned unit 9 for measuring the impedance value.

The means 12 for detecting the distance value H may emit the audio/video signal S1 upon deactivation of the vibratory handpiece 6 in order to check the position when work is not being done.

Alternatively, the detecting means 12 might also issue the signal S1 in real time, that is to say, while treatment is in progress with the handpiece 6 in operation.

For alerting the dentist immediately when the tip 7 is near the root canal apex, the sound emitting unit 14 may be programmed to emit the audible signal SA when the tip 7 reaches a predetermined distance H from the apex at the bottom of the root canal 8. The signal SA may differ in tone according to how close or far the apex of the canal 8 is.

A dental unit made in this way thus achieves the aim of providing a display and alerting system for controlling the position of the tip applied to the vibratory handpiece during root canal treatment.

The addition of this function is extremely useful for the dentist while having a relatively low impact, in terms of cost and space, on the existing structure and functions of the dental unit: in this way, the dental unit's range of operating capabilities is further extended and enhanced.

The invention described is susceptible of industrial application and may be modified and adapted in several ways without thereby departing from the scope of the appended claims. Moreover, all the details of the invention may be substituted by technically equivalent elements.

## Claims

1. A dental unit (1) comprising at least:
- a chair (2);
- a base (3) positioned next to the chair (2) and mounting main or auxiliary equipment;
- at least one handpiece tray (4) holding a plurality of operating or auxiliary handpieces (5) for dental operations of traditional conservative type, for implants and/or for endodontic surgery, including a handpiece (6) adapted to impart sonic or ultrasonic vibrations to a file tip (7) applicable to the handpiece (6) and used for treating root canals (8);
the dental unit (1) further comprising:
- a unit (9) for measuring a given value (V) of an electrical quantity generated, in combination, by a first pole defined by the file tip (7) applied to the vibratory handpiece (6) and positioned in the root canal (8), and a second pole defined by a reference element (10) positioned in the oral cavity and connected at the other end to the dental unit (1);
- a unit (11) for processing a respective signal (S) sent by the measuring unit (9) as a function of the value (V) of the electrical quantity in such a way as to transduce the signal (S) into a value (H) corresponding to the distance between the tip (7) and the apex of the root canal (8);
- means (12) for detecting the distance value (H), connected to the processing unit (11) and designed to at least issue a proportional audio/video reference signal (S1) as a function of the distance (H) between the tip (7) and the root canal apex; the dental unit (1) being **characterised in that** the means (12) for detecting the distance value (H) emit the signal (S1) upon deactivation of the vibratory handpiece (6).

2. The dental unit according to claim 1, **characterised in that** it comprises a data display screen (13) associated with the dental unit (1); the screen (13) being connected to the means (12) for detecting the distance value (H) so as to display the value (H) in alphanumeric form.

3. The dental unit according to claim 1, **characterised in that** it comprises a sound emitting unit (14) associated with the dental unit (1) and connected to the detecting means (12) to emit an audible signal (SA) proportional to the distance value (H) reached by the tip (7).

4. The dental unit according to claims 1 to 3, further comprising a microprocessor unit (15) to control the main and auxiliary functions of the dental unit (1) and of the handpieces (5), **characterised in that** the unit (9) for measuring the value (V) of the electrical quantity and the processing unit (11) are connected to the microprocessor unit (15); the microprocessor unit (15) also controlling the detecting means (12).

5. The dental unit according to claim 1, **characterised in that** the measuring unit (9) measures an electrical impedance.

6. The dental unit according to claim 1, **characterised in that** the reference element is composed of a metal hook (10) fitted with a connecting cable (16) applicable to the dental unit (1) and connected to the measuring unit (9).

7. The dental unit according to claims 1 to 3, **characterised in that** the means (12) for detecting the distance value (H) emit the signal (S1) in real time, that is to say, while the vibratory handpiece (6) is in operation.

8. The dental unit according to claims 1 and 3, **characterised in that** the sound emitting unit (14) is programmed to emit the audible signal (SA) when the tip (7) reaches a predetermined distance (H) from the apex at the bottom of the root canal (8).

9. The dental unit according to claims 1 and 2, **characterised in that** the screen (13) displays the distance value (H) as a number expressed in millimetres.

## Patentansprüche

1. Dentaleinheit (1) zumindest Folgendes beinhaltend:
- einen Patientenstuhl (2);
- einen Sockel (3), der neben dem Patientenstuhl (2) angeordnet ist und Haupt- oder Zusatzausrüstungen trägt;
- mindestens eine Instrumentenablage (4), die mit mehreren Behandlungs- oder Zusatz-Handstücken (5) für zahnärztliche Behandlungen herkömmlicher konservativer Art, für Implantate und/oder für die endodontische Chirurgie ausgerüstet ist, einschließlich eines Handstückes (6), das dafür ausgelegt ist, Schall- oder Ultraschallschwingungen auf eine Feilenspitze (7) zu übertragen, die an dem Handstück (6) angebracht werden kann und zur Behandlung von Wurzelkanälen (8) verwendet wird;
wobei die Dentaleinheit (1) ferner beinhaltet:
- eine Einheit (9) zum Messen eines gegebenen Wertes (V) einer elektrischen Größe, die in Kombination erzeugt wird durch einen ersten Pol, der durch die am vibrierenden Handstück (6) angebrachte und in den Wurzelkanal (8) eingeführte Feilenspitze (7) gebildet wird, und einem zweiten Pol, der durch ein Referenzelement (10) gebildet wird, das in der Mundhöhle angeordnet und am anderen Ende mit der Dentaleinheit (1) verbunden ist;
- eine Einheit (11) zur Verarbeitung eines entsprechenden Signals (S), das von der Messeinheit (9) als Funktion des Wertes (V) der elektrischen Größe ausgesendet wird, um das Signal (S) in einen Wert (H) umzuwandeln, der dem Abstand zwischen der Spitze (7) und dem Apex des Wurzelkanals (8) entspricht;
- Mittel (12) zur Erfassung des Abstandswertes (H), die an die Verarbeitungseinheit (11) angeschlossen und dafür ausgelegt sind, zumindest ein proportionales Audio/Video-Referenzsignal (S1) als Funktion des Abstandes (H) zwischen der Spitze (7) und dem Apex des Wurzelkanals auszugeben; wobei die Dentaleinheit (1) **dadurch gekennzeichnet ist, dass** die Mittel (12) zur Erfassung des Abstandswertes (H) das Signal (S1) bei Deaktivierung des vibrierenden Handstücks (6) ausgeben.

2. Dentaleinheit nach Anspruch 1, **dadurch gekennzeichnet, dass** sie einen Datenanzeige-Bildschirm (13) beinhaltet, der mit der Dentaleinheit (1) verbunden ist; wobei der Bildschirm (13) an die Mittel (12) zur Erfassung des Abstandswertes (H) angeschlossen ist, um den Wert (H) im alphanumerischen Format anzuzeigen.

3. Dentaleinheit nach Anspruch 1, **dadurch gekennzeichnet, dass** sie eine Klangausgabeeinheit (14) beinhaltet, die mit der Dentaleinheit (1) verbunden und an die Erfassungsmittel (12) angeschlossen ist, um ein hörbares Signal (SA) auszugeben, das proportional zu dem von der Spitze (7) erreichten Abstandswert (H) ist.

4. Dentaleinheit nach den Ansprüchen 1 bis 3, ferner beinhaltend eine Mikroprozessoreinheit (15) zur Steuerung der Haupt- und Zusatzfunktionen der Dentaleinheit (1) und der Handstücke (5), **dadurch gekennzeichnet, dass** die Einheit (9) zum Messen des Wertes (V) der elektrischen Größe und die Verarbeitungseinheit (11) an die Mikroprozessoreinheit (15) angeschlossen sind; wobei die Mikroprozessoreinheit (15) auch die Erfassungsmittel (12) steuert.

5. Dentaleinheit nach Anspruch 1, **dadurch gekennzeichnet, dass** die Messeinheit (9) einen elektrischen Widerstand misst.

6. Dentaleinheit nach Anspruch 1, **dadurch gekennzeichnet, dass** das Referenzelement aus einem Metallhaken (10) besteht, der mit einem Anschlusskabel (16) versehen ist, das mit der Dentaleinheit (1) verbunden und an die Messeinheit (9) angeschlossen werden kann.

7. Dentaleinheit nach den Ansprüchen 1 bis 3, **dadurch gekennzeichnet ist, dass** die Mittel (12) zur Erfassung des Abstandswertes (H) das Signal (S1) in Echtzeit ausgeben, das heißt, während das vibrierende Handstück (6) in Betrieb ist.

8. Dentaleinheit nach den Ansprüchen 1 und 3, **dadurch gekennzeichnet, dass** die Klangausgabeeinheit (14) so programmiert ist, dass sie ein hörbares Signal (SA) ausgibt, wenn die Spitze (7) einen vorbestimmten Abstand (H) vom Apex am Ende des Wurzelkanals (8) erreicht.

9. Dentaleinheit nach den Ansprüchen 1 und 2, **dadurch gekennzeichnet, dass** der Bildschirm (13) den Abstandswert (H) als eine in Millimetern ausgedrückte Zahl anzeigt.

## Revendications

1. Une unité dentaire (1) comprenant au moins :
- un fauteuil (2) ;
- un bloc (3) positionné à côté du fauteuil (2) et supportant une instrumentation principale ou auxiliaire ;
- au moins une tablette (4) pour pièces à main supportant une pluralité de pièces à main (5) opérationnelles ou auxiliaires pour des opérations dentaires conservatrices traditionnelles, pour des implants et/ou pour des opérations de chirurgie endodontique, comprenant une pièce à main (6) destinée à imprimer des vibrations soniques ou ultrasoniques à une pointe de lime (7) pouvant être appliquée sur ladite pièce à main (6) et utilisée pour le traitement de canaux radiculaires (8) ; l'unité dentaire (1) comprenant en outre :
- une unité (9) servant à mesurer une valeur donnée (V) d'une quantité électrique générée, en combinaison, par un premier pôle défini par la pointe de lime (7) appliquée sur la pièce à main (6) vibrante et positionnée dans le canal radiculaire (8), et un deuxième pôle défini par un élément de référence (10) placé dans la cavité orale et relié, à l'autre extrémité, à l'unité dentaire (1) ;
- une unité (11) servant à traiter un signal (S) respectif envoyé par l'unité de mesure (9) en tant que fonction de la valeur (V) de la quantité électrique, de manière à convertir ledit signal (S) en une valeur (H) correspondant à la distance entre la pointe (7) et l'apex du canal radiculaire (8) ;
- des moyens (12) servant à détecter la valeur de distance (H), reliés à l'unité de traitement (11) et destinés au moins à émettre un signal (S1) de référence audio/vidéo proportionnel en fonction de la distance (H) entre la pointe (7) et l'apex du canal radiculaire ; l'unité dentaire (1) étant **caractérisée en ce que** les moyens (12) de détection de la valeur de distance (H) émettent le signal (S1) lors de la désactivation de la pièce à main (6) vibrante.

2. L'unité dentaire selon la revendication 1, **caractérisée en ce qu'**elle comprend un écran (13) d'affichage de données, associé à l'unité dentaire (1) ; ledit écran (13) étant relié aux moyens (12) de détection de la valeur de distance (H) de manière à afficher ladite valeur (H) sous une forme alphanumérique.

3. L'unité dentaire selon la revendication 1, **caractérisée en ce qu'**elle comprend une unité (14) d'émission sonore, associée à l'unité dentaire (1) et reliée aux moyens (12) de détection pour émettre un signal audible (SA) proportionnel à la valeur de distance (H) atteinte par la pointe (7).

4. L'unité dentaire selon les revendications de 1 à 3, comprenant en outre une unité (15) à microprocesseur servant à commander les fonctions principales et auxiliaires de l'unité dentaire (1) et des pièces à main (5), **caractérisée en ce que** l'unité (9) de mesure de la valeur (V) de la quantité électrique et l'unité (11) de traitement sont reliées à l'unité (15) à microprocesseur ; ladite unité (15) à microprocesseur commandant aussi les moyens de détection (12).

5. L'unité dentaire selon la revendication 1, **caractérisée en ce que** l'unité de mesure (9) mesure une impédance électrique.

6. L'unité dentaire selon la revendication 1, **caractérisée en ce que** l'élément de référence est composé d'un crochet métallique (10) muni d'un câble de raccordement (16) pouvant être appliqué à l'unité dentaire (1) et relié à l'unité de mesure (9).

7. L'unité dentaire selon les revendications de 1 à 3, **caractérisée en ce que** les moyens (12) de détection de la valeur de distance (H) émettent le signal (S1) en temps réel, c'est-à-dire alors que la pièce à main (6) vibrante est en fonctionnement.

8. L'unité dentaire selon les revendications 1 et 3, **caractérisée en ce que** l'unité (14) d'émission sonore est programmée pour émettre le signal audible (SA) lorsque la pointe (7) atteint une distance (H) prédéfinie par rapport à l'apex au fond du canal radiculaire (8).

9. L'unité dentaire selon les revendications 1 et 2, **caractérisée en ce que** l'écran (13) affiche la valeur de distance (H) sous la forme d'un chiffre exprimé en millimètres.
